# FASCICULE DE BREVET EUROPEEN

(11) **EP 2 993 320 B1**
(45) Date de publication et mention de la délivrance du brevet: **25.01.2017**
(21) Numéro de dépôt: 15178634.0
(22) Date de dépôt: 28.07.2015
(51) Int. Cl.: F01N 3/08, F01N 3/20, F01N 9/00, F01N 3/021, F02D 41/02, F01N 13/00

(54) **VÉHICULE AUTOMOBILE À DISPOSITIF DE DÉPOLLUTION DE GAZ D'ÉCHAPPEMENT AMÉLIORÉ**
KRAFTFAHRZEUG MIT VERBESSERTER ABGASREINIGUNG
MOTOR VEHICLE WITH IMPROVED EXHAUST GAS PURIFICATION DEVICE

(30) Priorité: 04.09.2014 FR 1458255
(43) Date de publication de la demande: 09.03.2016
(73) Titulaire: Peugeot Citroen Automobiles S.A., 78140 Vélizy Villacoublay (FR)
(72) Inventeur: CREHAN, Gabriel, 92420 VAUCRESSON (FR)

(56) Documents cités:
- EP-A1- 2 740 911
- WO-A1-2008/149213
- FR-A1- 2 941 874
- US-A1- 2008 314 031

## Description

L'invention concerne les dispositifs de dépollution des moteurs à combustion de véhicules automobiles, notamment véhicules diesel et lorsque la ligne d'échappement comporte un module de réduction sélective d'oxydes d'azote et un module d'absorption d'oxydes d'azote par fonctionnement pauvre.

On connait les dispositifs de réduction catalytique sélective ou SCR pour Selective Catalyst Réduction selon la terminologie anglo-américaine. On connait également les dispositifs d'absorption d'oxydes d'azote par fonctionnement pauvre ou LNT pour Lean NOx Trap selon la terminologie anglo-américaine, littéralement piège pauvre à NOx.

Les moteurs diesel équipés d'un dispositif de réduction catalytique sélective présentent l'avantage d'une économie de carburant du fait d'un fonctionnement en conditions pauvres, lequel fonctionnement permet une consommation de carburant optimisée.

Cependant, la présence d'un réservoir SCR qui dans la pratique se vide avant les visites de maintenance préprogrammées, obligeant le conducteur à remplir le réservoir lui-même, peut apparaitre comme une contrainte pour un client potentiel. Or si le réservoir n'est pas rempli régulièrement, le véhicule peut se trouver immobiliser par obligation légale.

Différentes solutions ont été proposées pour passer du mode SCR au mode LNT de manière à améliorer l'autonomie du réservoir SCR et/ou à éviter que le véhicule ne soit bloqué en vertu d'une disposition légale de type anti-pollution.

Une solution a été identifiée, laquelle consiste à commuter entre le système SCR et le système LNT une fois que le réservoir SCR présente un niveau critique. Dans cette solution, on passe donc à un système moins performant en consommation et moins performant en termes de dépollution et cela de manière constante jusqu'à ce que le réservoir soit à nouveau rempli.

Le document 2013/0186064 propose de commuter entre un fonctionnement à LNT passif et un fonctionnement à SCR actif. Lorsque la température de la ligne d'échappement devient suffisamment élevée au niveau du catalyseur SCR, alors le mode LNT actif est arrêté et le mode SCR actif est redémarré, l'injection d'urée étant alors reprise. Néanmoins cette stratégie présente une trop faible efficacité en matière de dépollution et de consommation de carburant.

La demande de brevet WO 2008/149213 décrit un système de traitement des gaz d'échappement utilisant un piège à NOx et un catalyseur de réduction sélective des NOx en aval du piège à NOx sur la ligne d'échappement. Il y est proposé d'arrêter l'injection de l'urée alimentant le catalyseur de réduction sélective si au moins l'une des températures atteintes dans le piège à NOx et dans le catalyseur de réduction sélective est égale ou inférieure à une température de référence.

Le but de l'invention est de proposer un véhicule automobile qui ait un niveau de consommation peu élevé, une action dépolluante satisfaisante, et qui permette d'éviter au conducteur le désagrément d'un remplissage fréquent d'un réservoir de réducteur d'oxyde d'azote.

Ce but est atteint selon l'invention grâce à un véhicule automobile comprenant une ligne d'échappement incluant un module de réduction catalytique sélective d'oxyde d'azote et un module d'absorption d'oxyde d'azote par fonctionnement pauvre en mode passif, le véhicule comprenant un module de pilotage apte à placer sélectivement le module de réduction catalytique sélective en mode actif et/ou le module d'absorption en mode actif produisant une élimination des oxydes d'azote du module d'absorption, caractérisé en ce que le module de pilotage est configuré pour surveiller au moins un paramètre parmi un paramètre indicatif du régime moteur et un paramètre indicatif de la puissance instantanée produite par le moteur, comparer ce dit au moins un paramètre à au moins une valeur seuil de réduction, et placer le module de réduction catalytique sélective en mode actif lorsque ce dit au moins un paramètre devient supérieur à la dite au moins une valeur seuil de réduction, et le module de pilotage est configuré pour comparer ce dit au moins un paramètre à au moins une valeur seuil d'absorption, et placer le module d'absorption d'oxyde d'azote en mode actif produisant une élimination des oxydes d'azote du module d'absorption lorsque ce dit au moins un paramètre devient inférieur à la dite au moins une valeur seuil d'absorption. Le module de pilotage est aussi configuré pour comparer ledit au moins un paramètre parmi un paramètre indicatif du régime moteur et un paramètre indicatif de la puissance instantanée produite par le moteur à au moins une seconde valeur seuil d'absorption, et placer le module d'absorption d'oxyde d'azote en mode actif lorsque ce dit au moins un paramètre devient supérieur à la dite au moins une seconde valeur seuil d'absorption.

Avantageusement, le module de pilotage est configuré pour surveiller au moins un paramètre indicatif du régime du véhicule et au moins un paramètre indicatif de la puissance instantanée produite par le véhicule, comparer ces deux paramètres à une valeur seuil respective, et placer le module de réduction catalytique sélective en mode actif lorsque l'un au moins des deux paramètres devient supérieur à sa valeur seuil respective.

Avantageusement, le module de pilotage est configuré pour surveiller au moins un paramètre indicatif du régime du véhicule et au moins un paramètre indicatif de la puissance instantanée produite par le véhicule, comparer ces deux paramètres à une valeur seuil respective, et placer le module de réduction catalytique sélective en mode passif lorsque ces deux paramètres deviennent tous deux inférieurs à leur valeur seuil respective.

Avantageusement, le module de pilotage est configuré pour surveiller une température indicative d'une température dans le module d'absorption d'oxyde d'azote, comparer cette température surveillée à une température seuil, et placer le module d'absorption d'oxyde d'azote en mode actif lorsque cette température surveillée devient supérieure à cette température seuil.

Avantageusement, la température seuil à laquelle est comparée la température indicative de la température dans le module d'absorption d'oxydes d'azote est sensiblement égale à 200°C.

Avantageusement, la température indicative de la température dans le module d'absorption d'oxyde d'azote est une température prélevée en amont du module d'absorption d'oxyde d'azote.

Avantageusement, le module de pilotage est configuré pour désactiver le module d'absorption d'oxyde d'azote lorsque la température indicative de la température dans le module d'absorption d'oxyde d'azote dépasse une valeur seuil sensiblement égale à 400°C.

Avantageusement, le module de pilotage est configuré pour placer le module d'absorption d'oxyde d'azote en mode actif en commandant un fonctionnement du moteur en mode riche.

Avantageusement, le module de pilotage est configuré pour surveiller une température indicative d'une température dans le module de réduction catalytique sélective, comparer cette température surveillée à une température seuil, et placer le module de réduction catalytique sélective en mode actif lorsque cette température surveillée devient inférieure à cette température seuil.

D'autres caractéristiques, buts et avantages de l'invention apparaitront à la lecture de la description détaillée qui va suivre, faite en référence aux figures annexées sur lesquelles :
- la figure 1 représente une ligne d'échappement selon un mode de réalisation de l'invention.
- la figure 2 représente un diagramme de pilotage de ligne d'échappement selon ce même mode de réalisation de l'invention.

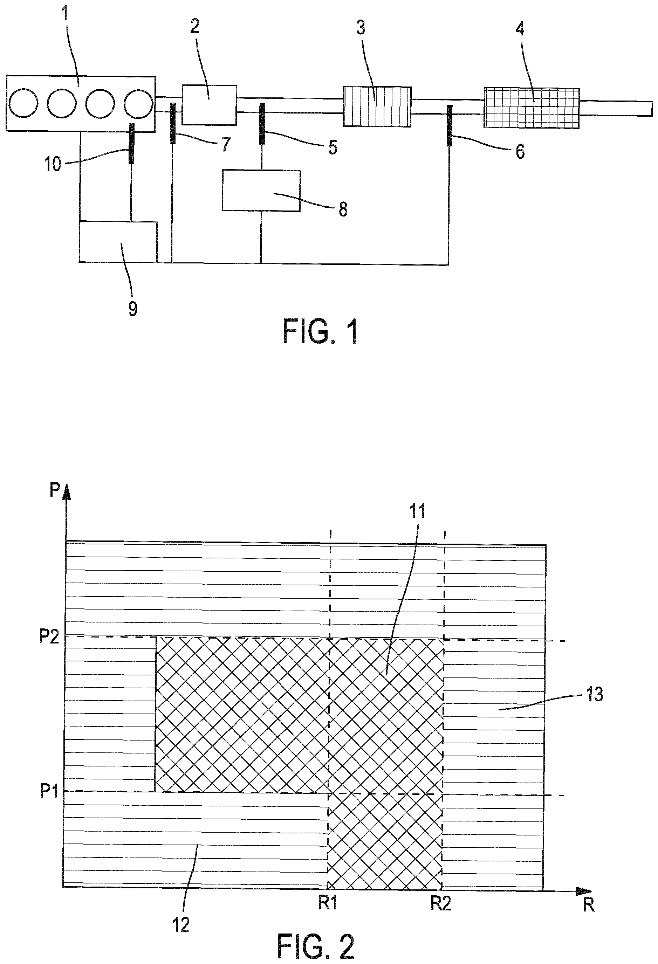

Sur la figure 1, on a représenté une ligne d'échappement s'étendant depuis un bloc moteur référencé 1. La ligne d'échappement comporte successivement un piège à NOx par fonctionnement pauvre 2, un catalyseur de réduction catalytique sélective ou SCR 3, et un filtre à particules 4 de type à suies ou Soot selon la terminologie anglophone, avec ou sans revêtement de type SCR. La ligne d'échappement comporte également un injecteur d'agent réducteur 5 incluant une sonde de température, un détecteur d'oxydes d'azote 6 disposé entre le catalyseur de réduction catalytique sélective 3 et le filtre à particules 4, lequel détecteur 6 inclut un thermocouple, et un autre détecteur d'oxydes d'azote 7 incluant également un thermocouple, disposé entre le bloc moteur 1 et le piège à oxydes d'azote 2. Un réservoir d'urée 8 approvisionne le dispositif d'injection 5. La ligne d'échappement est pilotée par un calculateur embarqué lequel est représenté sous la référence 9. Une sonde de mesure de taux d'oxygène 10 est également disposée au niveau du bloc moteur.

En mode piège à NOx 2 actif, le moteur fonctionne avec une consommation de carburant diesel accrue de l'ordre de 1 à 2 % par rapport au fonctionnement à réduction catalytique. Cependant le conducteur n'a plus à remplir continuellement le réservoir de réducteur d'oxydes d'azote 8.

On a représenté sur la figure 2 un diagramme bidimensionnel sur lequel sont rapportés en abscisse le régime moteur R et en ordonnées la puissance instantanée P délivrée par le moteur.

Le calculateur 9 est configuré pour surveiller le régime moteur R et la puissance instantanée P et en déduire lequel des deux modes Lean NOx Trap pour réaliser l'élimination des oxydes d'azote avec des phases en mode riche ou Selective Catalytic Reduction -SCR-pour faire l'élimination des NOx via l'injection d'Adblue doit être activé.

Sur la figure 2, on a représenté deux valeurs R1 et R2, ici respectivement égales à 2500 tours par minute et 4500 tours par minutes. On a également représenté deux valeurs de puissance P1 et P2, ici respectivement égales à 45.000 Watts et 60.000 Watts.

Le calculateur 9 ou module de pilotage est configuré pour surveiller le régime moteur et la puissance instantanée. Il est en outre configuré pour comparer le régime moteur au seuil de régime R1 et la puissance instantanée au seuil de puissance P1.

Lorsque le régime moteur devient supérieur à la valeur R1 ou que la puissance instantanée devient supérieure à P1, alors le module de pilotage 9 place le moteur en mode SCR actif. (on peut aussi placer le moteur en mode SCR actif quand lorsque le régime moteur devient supérieur à la valeur R1 et quand la puissance instantanée devient supérieure à P1). Les conditions de dépassement de la valeur R1 ou de la valeur P1 sont représentées par la zone décrivant une forme de L inversé référencée 11 sur la figure.

Au contraire, lorsque le régime moteur est inférieur à R1 ou que la puissance instantanée est inférieure à P1, alors le module de pilotage 9 place le moteur en mode de fonctionnement Lean NOx Trap -LNT Actif pour faire le deNOx. (On peut aussi choisir de placer le LNT en mode actif quand lorsque le régime moteur est inférieur à R1 et quand la puissance instantanée est inférieure à P1). Le système SCR bascule en mode SCR Passif. La zone 12 de la figure correspond au mode de fonctionnement à absorption où la puissance et le régime sont tous deux inférieurs à leur seuil respectif.

Bien que l'on décrive ici un mode de fonctionnement où le module de pilotage surveille à la fois la puissance et le régime, dans une variante le module de pilotage surveille uniquement l'un de ces deux paramètres, et le module de pilotage rend le mode SCR actif lorsque le seuil appliqué se trouve dépassé. De la même façon, bien que l'on ait exprimé la puissance délivrée en Watts dans le présent exemple, la puissance délivrée de manière instantanée peut également être prise en compte dans son expression sous forme de couple en Newton mètres ou encore en chevaux-vapeur.

Dans le présent mode de réalisation, on repasse en mode à absorption d'oxydes d'azote lorsque le seuil de régime R2 ou le seuil de puissance P2 se trouve dépassé à la hausse. Cette zone de fonctionnement est représentée par une forme en L inversé portant la référence 13 sur la figure 2.

Le fait de passer en mode à réduction catalytique pour un seuil de régime et/ou de puissance dépassé permet d'optimiser le fonctionnement de la ligne d'échappement. Il apparait ainsi que le mode à réduction catalytique sélective SCR- actif, dont l'effet dépolluant est plus élevé, est mieux adapté aux fonctionnements du moteur à haut régime et/ou à haute puissance, lesquels sont producteurs d'une quantité plus élevée d'oxydes d'azote. De plus, l'utilisation du mode SCR actif à haut régime et/ou haute puissance permet d'éviter le mode LNT Actif lequel génère une surconsommation, évitant ainsi d'appliquer une surconsommation dans une zone où la consommation de départ est déjà élevée. Le mode à absorption est quant à lui avantageusement conservé pour les zones de fonctionnement du moteur qui produisent une quantité plus faible d'oxydes d'azote. De la sorte, on obtient un schéma de dépollution qui est plus efficace, moins consommateur de réducteur d'oxydes d'azote et qui engendre moins de surconsommation de carburant.

De manière avantageuse, le présent module de pilotage 9 surveille également la température fournie par le détecteur 7 lequel fournit une température indicative d'une température dans le module d'absorption d'oxydes d'azote 2. Le calculateur 9 compare cette température surveillée à une température seuil sensiblement égale à 200°C, ici égale à 220°C, et place le module en mode actif lorsque cette température surveillée dépasse cette température seuil de 220°C. Le mode Lean NOx Trap -LNT- est connu pour absorber des NOx essentiellement par fonctionnement pauvre 2 , le mode actif étant utilisé notamment pour éliminer les NOx stockés dans le module d'absorption, typiquement par transformation in situ dans le module d'absorption en molécules N₂. Il place concomitamment le module SCR 3 en mode passif.

La température indicative de la température dans le module de réduction catalytique sélective 3 est également comparée à une seconde température seuil, ici de 140°C, et le module SCR 3 est désactivé lorsque la température indicative de la température dans le module de réduction catalytique sélective 3 devient inférieure à cette seconde température seuil. En dessous le 140°C, le module LNT travaille en mode passif.

Au-delà de 450°C, le module LNT 2 est désactivé et le module SCR est activé, le module SCR présentant une efficacité plus grande que le module LNT du fait de son plus large spectre d'efficacité.

Les températures surveillées peuvent être prélevées en un ou plusieurs points dans la ligne d'échappement. Dans le présent exemple les températures surveillées sont respectivement la température en amont direct du module SCR pour le pilotage de ce dernier et la température en amont direct du module LNT pour le pilotage de ce dernier.

Le module LNT absorbe les oxydes d'azote aux basses températures. De manière préférentielle, le module LNT comporte des sites de stockage d'oxydes d'azote à basse température qui sont prévus pour libérer les oxydes d'azote à partir de 200°C, de telle sorte que les oxydes d'azote ainsi libérés soient traités par le NH3 pré-stocké dans le module SCR, de sorte que le module SCR traite ces oxydes d'azote, qu'il soit actif ou pas. L'activation du mode LNT, ou passage en mode LNT actif, peut être définie par la présence de phases riches en carburant, avec une valeur du paramètre lambda inférieure à 1. En mode LNT actif, les oxydes d'azote piégés sont transformés in situ avec le HC du fait de la phase de fonctionnement riche. Lorsque le mode LNT n'est pas activé, alors le module LNT se comporte comme un catalyseur de stockage d'oxydes d'azote passif à fonctionnement pauvre. Le mode SCR actif est communément compris comme le fait d'injecter le réducteur d'oxyde d'azote dans le module SCR.

Le calculateur 9 ou module de pilotage est configuré pour surveiller une température fournie par la sonde de température intégrée à l'injecteur 5, laquelle température est indicative d'une température dans le module de réduction catalytique sélective 3. Il est en outre configuré pour comparer cette température surveillée à la température seuil de 220°C et placer le module de réduction catalytique sélective 3 en mode actif lorsque cette température surveillée est inférieure à cette température seuil. Il désactive concomitamment le module LNT 2 lorsque la température dans celui-ci passe en dessous de 220°C. Au final, il s'avère que le module LNT 2 apporte de meilleurs résultats que le module SCR pour des températures situées entre environ 200°C et environ 400°C, et ce avec une pénalité sur la consommation qui est la plus faible.

Dans le présent exemple de réalisation, la comparaison du régime et de la puissance est prédominante sur les tests de température pour déclencher ou non l'activation des modes de dépollution SCR et LNT. Ainsi, lorsque la conclusion tirée de la comparaison des températures est contraire à la conclusion tirée de la comparaison des régimes et/ou des puissances, alors c'est la comparaison des régimes et/ou des puissances qui détermine le mode à activer. Dans une variante, la comparaison des températures doit être concordante avec la comparaison des régimes et/ou des puissances pour le changement de mode actif. Ainsi, le changement de mode actif ne peut s'opérer que lorsque la température passe dans la zone qui confirme le besoin de changement de mode indiqué par le régime et/ou la puissance.

Dans le présent exemple de réalisation, le moteur est équipé d'une seule ligne d'échappement laquelle est munie de deux modules séparés 2 et 3 respectivement d'absorption pauvre d'oxyde d'azote et de réduction catalytique sélective. Ces modules peuvent être placés en amont ou en aval du filtre à particules 4. En variante, le module d'absorption et le module de réduction peuvent être constitués d'un même organe lequel est monté de manière unitaire sur la ligne d'échappement.

Le filtre à particules 4 peut être imprégné de réducteur d'oxyde d'azotes et être équipé ou pas d'un revêtement catalytique. De même, un additif de régénération à suies ou soot en anglais peut être utilisé. Le module placé le plus proche du bloc moteur 1, ici le module d'absorption 2, peut contenir des métaux précieux pour la fonction d'élimination des CO et HC et pour la fonction de stockage des oxydes d'azote et de dénitrification. Ces deux fonctions, LNT ou PNA - Passive NOx Adsorber selon la terminologie anglophone ou absorbeur NOx passif - et SCR, peuvent alors avantageusement coexister dans le même revêtement catalytique car les formulations catalytiques deviennent actives seulement sous des conditions de fonctionnement moteur respectivement adéquates. De même un système de recirculation des gaz d'échappement ou EGR pour Exhaust Gaz Recirculation selon la terminologie anglophone peut être adopté, qu'il soit à haute pression ou à basse pression et qu'il consiste en une recirculation depuis un seul cylindre ou depuis plusieurs cylindres du moteur.

Les métaux précieux peuvent également être utilisés pour accélérer la vitesse d'absorption et de désorption des oxydes d'azote. Les métaux précieux et leurs mélanges, tels que Au, Ag, Ir, Ru, Rh, Pt, Pd, servent également de sites de réduction des oxydes d'azote en présence des matériaux de réduction. Des zéolites peuvent être utilisées non seulement comme matériaux absorbeurs d'oxydes d'azote mais également comme pièges à HC.

Un DOC - Diesel Oxydation Catalyst selon la terminologie anglophone ou catalyseur d'oxydation diesel - comprenant un matériau d'absorption de NOx est par exemple constitué de 1,6 litres de structure monolithe de cordiérite avec 600 cellules par inch au carré et une épaisseur de paroi de 3 milli-inch. Le chargement est par exemple de 100 grammes par pied au cube avec un ratio Pt :Pd :Rh de 2 :1 :1.

La formulation du PNA peut typiquement comprendre des métaux alcalins, des métaux alcalins terrestres, des métaux rares terrestres ou des métaux de transition ou des mélanges d'oxydes de deux ou plus de ces composés. La formulation du PNA peut également comprendre des zéolithes, des zéolithes dopés en métaux, avec préférentiellement des oxydes de Al, Ce, Zr, Cu, Fe, Mn, et Cu et leurs mélanges, des perovskites, des argiles, des carbones et/ou des oxydes. Egalement, d'autres matériaux tels que des lanthanides, des oxydes actinides et leurs mélanges peuvent être utilisés. Les zéolites peuvent être utilises non seulement comme matériaux absorbants pour le NOx mais servent aussi comme pièges à HC. Des revêtements typiques peuvent comprendre : Al₂O₃, TiO₂, ZrO₂, CeO₂, Y₂O₃, SiO₂ et leurs mélanges. La formulation du PNA peut contenir 100g/l de matériaux CeOx. La formulation LNT peut contenir 100g/l de matériaux BaOx.

Tout type d'agent réducteur d'oxyde d'azote peut être utilisé. La formulation de réduction du module de réduction sélective peut être supportée par un monolithe à flux en paroi classique ou par une structure à circulation traversante de type filtre à particules.

Le réservoir 8 peut être réalisé en métal ou en matériau polymère. Il peut contenir un agent réducteur liquide, gazeux, ou par exemple un gaz à ammoniaque absorbé. Un agent réducteur quelconque peut être utilisé pour être introduit dans la ligne d'échappement. Des exemples typiques sont CO, HC, les alcools, glycols, glycerols, esters, acides, ammoniaques, ammonium, hydroxyde, urée, guanidine, sels de guanidium, etc.

Globalement, le mode SCR a une efficacité en dépollution qui est meilleure et sur une plus large plage de fonctionnement du moteur. Dans le présent mode de réalisation, on utilise les modes LNT et SCR alternativement sur la base des zones de dépollution s'avérant optimales pour chaque technologie. Les avantages sont que le mode LNT s'avère être utilisé dans une zone de dépollution optimale et il est peu utilisé lorsque son efficacité est plus faible de telle sorte que les niveaux d'oxyde d'azote à l'échappement sont maintenus au minimum. L'utilisation du mode SCR lorsque le mode LNT est moins efficace augmente l'autonomie du réservoir SCR. Ainsi les niveaux d'oxydes d'azote sont maintenus au minimum avec une autonomie maximale du réservoir d'agent réducteur d'oxydes d'azote. En préservant l'autonomie de l'agent réducteur d'oxydes d'azote, la consommation globale de carburant est améliorée comparée à un fonctionnement en mode LNT à 100%. L'invention trouve une application particulièrement avantageuse pour les véhicules hybrides à entrainement diesel et électrique.

## Revendications

1. Véhicule automobile comprenant une ligne d'échappement incluant un module de réduction catalytique sélective d'oxyde d'azote (3) et un module d'absorption d'oxyde d'azote par fonctionnement pauvre en mode passif (2), le véhicule comprenant un module de pilotage (9) apte à placer sélectivement le module de réduction catalytique sélective (3) en mode actif et/ou le module d'absorption (2) en mode actif produisant une élimination des oxydes d'azote du module d'absorption, le module de pilotage (9) étant configuré - pour surveiller au moins un paramètre (R,P) parmi un paramètre indicatif du régime moteur (R) et un paramètre indicatif de la puissance instantanée (P) produite par le moteur, - comparer ce dit au moins un paramètre (R,P) à au moins une valeur seuil de réduction (R1,P1), - et placer le module de réduction catalytique sélective (3) en mode actif lorsque ce dit au moins un paramètre (R,P) devient supérieur à la dite au moins une valeur seuil de réduction (R1.P1), le véhicule étant **caractérisé en ce que** le module de pilotage est configuré pour comparer ce dit au moins un paramètre (R,P) à au moins une valeur seuil d'absorption (R1,P1), et placer le module d'absorption d'oxyde d'azote (2) en mode actif produisant une élimination des oxydes d'azote du module d'absorption lorsque ce dit au moins un paramètre (R,P) devient inférieur à la dite au moins une valeur seuil d'absorption (R1,P1) et ledit module de pilotage (9) est configuré pour comparer ledit au moins un paramètre (R,P) parmi un paramètre indicatif du régime moteur (R) et un paramètre indicatif de la puissance instantanée (P) produite par le moteur à au moins une seconde valeur seuil d'absorption (R2,P2), et placer le module d'absorption d'oxyde d'azote (2) en mode actif lorsque ce dit au moins un paramètre (R,P) devient supérieur à la dite au moins une seconde valeur seuil d'absorption (R2,P2).

2. Véhicule automobile selon la revendication 1, **caractérisé en ce que** le module de pilotage (9) est configuré pour surveiller au moins un paramètre (R) indicatif du régime du véhicule et au moins un paramètre (P) indicatif de la puissance instantanée produite par le véhicule, comparer ces deux paramètres (R,P) à une valeur seuil respective (R1,P1), et placer le module de réduction catalytique sélective (3) en mode actif lorsque l'un au moins des deux paramètres (R,P) devient supérieur à sa valeur seuil respective (R1,P1).

3. Véhicule automobile selon la revendication 1 ou la revendication 2, **caractérisé en ce que** le module de pilotage (9) est configuré pour surveiller au moins un paramètre indicatif du régime du véhicule (R) et au moins un paramètre indicatif de la puissance instantanée produite par le véhicule (P), comparer ces deux paramètres (R,P) à une valeur seuil respective (R1,P1), et placer le module de réduction catalytique sélective (3) en mode passif lorsque ces deux paramètres (R,P) deviennent tous deux inférieurs à leur valeur seuil respective.

4. Véhicule automobile selon l'une quelconque des revendications précédentes, **caractérisé en ce que** le module de pilotage (9) est configuré pour surveiller une température (7) indicative d'une température dans le module d'absorption d'oxyde d'azote (2), comparer cette température surveillée (7) à une température seuil, et placer le module d'absorption d'oxyde d'azote (2) en mode actif lorsque cette température surveillée (7) devient supérieure à cette température seuil.

5. Véhicule automobile selon la revendication précédente, **caractérisé en ce que** la température seuil à laquelle est comparée la température (7) indicative de la température dans le module d'absorption d'oxydes d'azote (2) est sensiblement égale à 200°C.

6. Véhicule automobile selon la revendication 4 ou la revendication 5, **caractérisé en ce que** la température (7) indicative de la température dans le module d'absorption d'oxyde d'azote (2) est une température prélevée en amont du module d'absorption d'oxyde d'azote (2).

7. Véhicule automobile selon l'une quelconque des revendications 4 à 6, **caractérisé en ce que** le module de pilotage (9) est configuré pour désactiver le module d'absorption d'oxyde d'azote (2) lorsque la température indicative de la température dans le module d'absorption d'oxyde d'azote (2) dépasse une valeur seuil sensiblement égale à 400°C.

8. Véhicule automobile selon l'une quelconque des revendications précédentes, **caractérisé en ce que** le module de pilotage (9) est configuré pour placer le module d'absorption d'oxyde d'azote (2) en mode actif en commandant un fonctionnement du moteur en mode riche.

9. Véhicule automobile selon l'une quelconque des revendications précédentes, **caractérisé en ce que** le module de pilotage (9) est configuré pour surveiller une température (5) indicative d'une température dans le module de réduction catalytique sélective (3), comparer cette température surveillée (5) à une température seuil, et placer le module de réduction catalytique sélective (3) en mode actif lorsque cette température surveillée (5) devient inférieure à cette température seuil.

## Patentansprüche

1. Kraftfahrzeug, das einen Abgasstrang umfasst, der ein Modul zur selektiven katalytischen Reduktion von Stickstoffoxid (3) und ein Stickstoffoxid-Absorptionsmodul durch mageren Betrieb im passiven Modus (2) aufweist, wobei das Fahrzeug ein Steuermodul (9) umfasst, das selektiv das Modul zur selektiven katalytischen Reduktion (3) in aktiven Modus und/oder das Absorptionsmodul (2) in aktiven Modus platzieren kann, der eine Eliminierung von Stickstoffoxiden des Absorptionsmoduls erzeugt, wobei das Steuermodul (9) konfiguriert ist, um mindestens einen Parameter (R, P) aus einem Parameter, der die Motordrehzahl (R) angibt, und einem Parameter, der die Momentanleistung (P), die von der Brennkraftmaschine erzeugt wird, angibt, auszuwählen, diesen mindestens einen Parameter (R, P) mit mindestens einem Reduktionsschwellenwert (R1, P1) zu vergleichen, und das Modul zur selektiven katalytischen Reduktion (3) in aktiven Modus zu platzieren, wenn dieser mindestens eine Parameter (R, P) größer wird als der mindestens eine Reduktionsschwellenwert (R1, P1), Fahrzeug **dadurch gekennzeichnet, dass** das Steuermodul konfiguriert ist, um diesen mindestens einen Parameter (R, P) mit mindestens einem Absorptionsschwellenwert (R1, P1) zu vergleichen und das Stickstoff-Absorptionsmodul (2) in aktiven Modus zu platzieren, der eine Eliminierung der Stickstoffoxide des Absorptionsmoduls erzeugt, wenn dieser mindestens eine Parameter (R, P) kleiner wird als der mindestens eine Absorptionsschwellenwert (R1, P1) und das Steuermodul (9) konfiguriert ist, um den mindestens einen Parameter (R, P) aus einem Parameter, der die Motordrehzahl (R) angibt, und einem Parameter, der die Momentanleistung (P), die von der Brennkraftmaschine erzeugt wird, angibt, mit mindestens einem zweiten Absorptionsschwellenwert (R2, P2) zu vergleichen und das Stickstoffoxid-Absorptionsmodul (2) in aktiven Modus zu platzieren, wenn der mindestens eine Parameter (R, P) größer wird als der mindestens eine zweite Absorptionsschwellenwert (R2, P2).

2. Kraftfahrzeug nach Anspruch 1, **dadurch gekennzeichnet, dass** das Steuermodul (9) konfiguriert ist, um mindestens einen Parameter (R) zu überwachen, der die Drehzahl des Fahrzeugs angibt, und mindestens einen Parameter (P), der die Momentanleistung angibt, die von dem Fahrzeug erzeugt wird, diese zwei Parameter (R, P) mit einem jeweiligen Schwellenwert (R1, P1) zu vergleichen und das Modul zur selektiven katalytischen Reduktion (3) in aktiven Modus zu platzieren, wenn einer der mindestens zwei Parameter (R, P) größer wird als sein jeweiliger Schwellenwert (R1, P1).

3. Kraftfahrzeug nach Anspruch 1 oder Anspruch 2, **dadurch gekennzeichnet, dass** das Steuermodul (9) konfiguriert ist, um mindestens einen Parameter, der die Drehzahl des Fahrzeugs (R) angibt, und mindestens einen Parameter, der die Momentanleistung, die von dem Fahrzeug (P) erzeugt wird, angibt, zu überwachen, diese zwei Parameter (R, P) mit einem jeweiligen Schwellenwert (R1, P1) zu vergleichen und das Modul zur selektiven katalytischen Reduktion (3) in passiven Modus zu platzieren, wenn diese zwei Parameter (R, P) beide kleiner werden als ihr jeweiliger Schwellenwert.

4. Kraftfahrzeug nach einem der vorhergehenden Ansprüche, **dadurch gekennzeichnet, dass** das Steuermodul (9) konfiguriert ist, um eine Temperatur (7) zu überwachen, die eine Temperatur in dem Stickstoffoxid-Absorptionsmodul (2) angibt, diese überwachte Temperatur (7) mit einer Schwellentemperatur zu vergleichen und das Stickstoffoxid-Absorptionsmodul (2) in aktiven Modus zu platzieren, wenn diese überwachte Temperatur (7) größer wird als diese Schwellentemperatur.

5. Kraftfahrzeug nach dem vorhergehenden Anspruch, **dadurch gekennzeichnet, dass** die Schwellentemperatur, mit der die Temperatur (7), die die Temperatur in dem Stickstoffoxid-Absorptionsmodul (2) angibt, verglichen wird, im Wesentlichen gleich 200 °C ist.

6. Kraftfahrzeug nach Anspruch 4 oder Anspruch 5, **dadurch gekennzeichnet, dass** die Temperatur (7), die die Temperatur in dem Stickstoffoxid-Absorptionsmodul (2) angibt, eine Temperatur ist, die stromaufwärts des Stickstoffoxid-Absorptionsmoduls (2) abgenommen wird.

7. Kraftfahrzeug nach einem der Ansprüche 4 bis 6, **dadurch gekennzeichnet, dass** das Steuermodul (9) konfiguriert ist, um das Stickstoffoxid-Absorptionsmodul (2) zu deaktivieren, wenn die Temperatur, die die Temperatur in dem Stickstoffoxid-Absorptionsmodul (2) angibt, einen Schwellenwert im Wesentlichen gleich 400 °C überschreitet.

8. Kraftfahrzeug nach einem der vorhergehenden Ansprüche, **dadurch gekennzeichnet, dass** das Steuermodul (9) konfiguriert ist, um das Stickstoffoxid-Absorptionsmodul (2) in aktiven Modus zu platzieren, indem ein Betrieb der Brennkraftmaschine im reichen Modus gesteuert wird.

9. Kraftfahrzeug nach einem der vorhergehenden Ansprüche, **dadurch gekennzeichnet, dass** das Steuermodul (9) konfiguriert ist, um eine Temperatur (5) zu überwachen, die eine Temperatur in dem Modul zur selektiven katalytischen Reduktion (3) angibt, diese überwachte Temperatur (5) mit einer Schwellentemperatur zu vergleichen und das Modul zur selektiven katalytischen Reduktion (3) in aktiven Modus zu platzieren, wenn diese überwachte Temperatur (5) kleiner wird als diese Schwellentemperatur.

## Claims

1. A motor vehicle including an exhaust line including a selective catalytic reduction module of nitrogen oxide (3) and a nitrogen oxide absorption module by lean operation in passive mode (2), the vehicle including a control module (9) able to selectively place the selective catalytic reduction module (3) in active mode and/or the absorption module (2) in active mode producing an elimination of the nitrogen oxides from the absorption module, the control module (9) being configured - to monitor at least one parameter (R, P) from a parameter indicative of the engine speed (R) and a parameter indicative of the instantaneous power (P) produced by the engine, - to compare said at least one parameter (R, P) to at least one reduction threshold value (R1, P1), - and to place the selective catalytic reduction module (3) in active mode when said at least one parameter (R, P) becomes greater than said at least of reduction threshold value (R1, PI), the vehicle being **characterized in that** the control module is configured to compare said at least one parameter (R, P) to at least one absorption threshold value (R1, PI), and to place the nitrogen oxide absorption module (2) in active mode producing an elimination of the nitrogen oxides from the absorption module when said at least one parameter (R, P) becomes less than said at least one absorption threshold value (R1, P1) and said control module (9) is configured to compare said at least one parameter (R, P) from a parameter indicative of the engine speed (R) and a parameter indicative of the instantaneous power (P) produced by the engine to at least one second absorption threshold value (R2, P2), and to place the nitrogen oxide absorption module (2) in active mode when said at least one parameter (R, P) becomes greater than said at least one second absorption threshold value (R2, P2).

2. The motor vehicle according to Claim 1, **characterized in that** the control module (9) is configured to monitor at least one parameter (R) indicative of the speed of the vehicle and at least one parameter (P) indicative of the instantaneous power produced by the vehicle, to compare these two parameters (R, P) to a respective threshold value (R1, P1), and to place the selective catalytic reduction module (3) in active mode when one at least of the two parameters (R, P) becomes greater than its respective threshold value (R1, P1).

3. The motor vehicle according to Claim 1 or Claim 2, **characterized in that** the control module (9) is configured to monitor at least one parameter indicative of the speed of the vehicle (R) and at least one parameter indicative of the instantaneous power produced by the vehicle (P), to compare these two parameters (R, P) to a respective threshold value (R1, P1), and to place the selective catalytic reduction module (3) in passive mode when these two parameters (R, P) both become less than their respective threshold value.

4. The motor vehicle according to any one of the preceding claims, **characterized in that** the control module (9) is configured to monitor a temperature (7) indicative of a temperature in the nitrogen oxide absorption module (2), to compare this monitored temperature (7) to a threshold temperature, and to place the nitrogen oxide absorption module (2) in active mode when this monitored temperature (7) becomes greater than this threshold temperature.

5. The motor vehicle according to the preceding claim, **characterized in that** the threshold temperature to which the temperature (7) indicative of the temperature in the nitrogen oxide absorption module (2) is compared is substantially equal to 200°C.

6. The motor vehicle according to Claim 4 or Claim 5, **characterized in that** the temperature (7) indicative of the temperature in the nitrogen oxygen absorption module (2) is a temperature taken upstream of the nitrogen oxide absorption module (2).

7. The motor vehicle according to any one of Claims 4 to 6, **characterized in that** the control module (9) is configured to deactivate the nitrogen oxide absorption module (2) when the temperature indicative of the temperature in the nitrogen oxide absorption module (2) exceeds a threshold value substantially equal to 400°C.

8. The motor vehicle according to any one of the preceding claims, **characterized in that** the control module (9) is configured to place the nitrogen oxide absorption module (2) in active mode by controlling an operation of the engine in rich mode.

9. The motor vehicle according to any one of the preceding claims, **characterized in that** the control module (9) is configured to monitor a temperature (5) indicative of a temperature in the selective catalytic reduction module (3), to compare this monitored temperature (5) to a threshold temperature, and to place the selective catalytic reduction module (3) in active mode when this monitored temperature (5) becomes lower than this threshold temperature.
